# EUROPÄISCHE PATENTSCHRIFT

(11) **EP 4 343 172 B1**
(45) Veröffentlichungstag und Bekanntmachung des Hinweises auf die Patenterteilung: **21.05.2025**
(21) Anmeldenummer: 23000111.7
(22) Anmeldetag: 09.08.2023
(51) Int. Cl.: F16H 7/06, B61B 13/02, B61B 13/04, B61B 13/12, B61C 11/04, F16H 19/04, F16H 19/06

(54) **TRANSPORT-SYSTEM**
TRANSPORT SYSTEM
SYSTÈME DE TRANSPORT

(30) Priorität: 21.09.2022 DE 102022003475
(43) Veröffentlichungstag der Anmeldung: 27.03.2024
(73) Patentinhaber: Brehm, Bernhard, 75265 Calw-Stammheim (DE); Just, Manfred, 76709 Kronau (DE); Fetzner, Roland, 76646 Bruchsal (DE)
(72) Erfinder: Brehm, Bernhard, 75265 Calw- Stammheim (DE)
(74) Vertreter: Ludewig, Rita

(56) Entgegenhaltungen:
- WO-A1-2022/042870
- US-A- 4 991 516
- US-A- 6 095 054

## Beschreibung

Die Erfindung betrifft ein Transportelementen- System zur Steuerung von Anlagen verschiedenster technischer Bereiche auch im Schwerlastbereich, zum Beispiel für Lasten- und Personenaufzüge, den Materialtransport in Hochregallagern und dazu gehörige Transportmittel, wie Transportbänder, Gabelstapler, Seilbahnen, Hängebahnen etc.

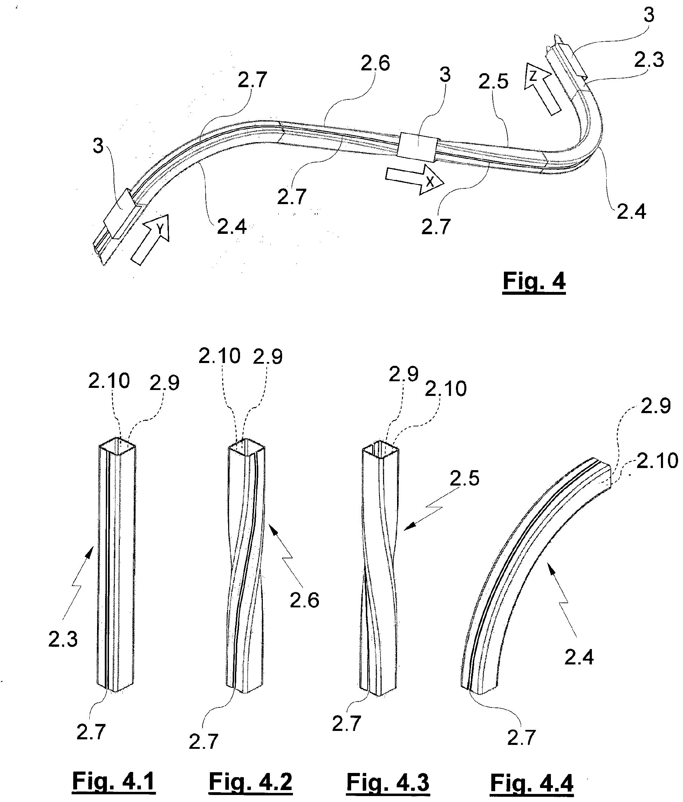

Die US 4 991 516 A beinhaltet ein Transportsystem für Werkstücke, aufweisend sich in Längsrichtung erstreckende Schienensegmente, die sich an einer Abzweigung oder Änderung der Bogenrichtung nur durch Rücksteuerung in dem Gleis entlang eines ursprünglichen Pfades fortsetzen, und weitere sich in Längsrichtung erstreckende Schienensegmente, die von den ersten Segmenten an einer Verzweigung abzweigen, sowie einem Werkstücktransportwagen, der auf den Schienen montiert und entlang der Schiene verschiebbar ist. Aufgabe der Erfindung ist ein verbessertes Transportsystem bereitzustellen, bei dem das Schienensystem passiv bleiben kann, so dass alle Elemente und Steuerungen zum Umlenken der Wagen auf einen Abzweig oder in einen anders gerichteten Bogen durch reversible Bewegung auf der Hauptstrecke des Gleises zurück und danach weiter in die abzweigende Strecke gesteuert werden kann. Nachteilig an der Lösung ist, dass das Schienensystem nur in eine Ebene aus zwei geradlinig und bogenförmig verlaufenden Elementen (siehe Fig.7) zusammengesetzt ist. Das hat zur Folge, dass Kurven immer nur in einer Richtung auszuführen sind. Um in andere Richtungen fahren zu können, muss der Wagen durch Rücksteuerung auf der Geraden und danach in eine andere Richtung gesteuert werden. Die Rücksteuerung ist bei Abzweigungen mit zwei Schienenelementen erforderlich (siehe Fig. 4b). Das Transportsystem kann keine dreidimensionale vertikal (z) ausführen. Durch die starre Ausführung der Schienenelemente sind bei Abzweigungen zwei Transportschienen erforderlich. Das Schienensystem ist nur in einer Ebene in zwei Richtungen vorwärts (x) und rückwärts (y) geradlinig und bogenförmig zu bewegen. Das hat zur Folge, dass das Transportsystem ausschließlich für den Warentransport (keinen Personentransport) einsetzbar ist.

Die WO 2022/042870 A1 offenbart einen linearen Zahnkettentrieb mit einer beidseitig verzahnten und flexiblen Zahnkette, die abtriebsseitig in ein Transportelement mit Aufnahmeöffnungen und deren Zahnflanken antriebsseitig mit einer Spitzverzahnung in Zahnkettenräder mit einer Evolventen- Verzahnung eingreifen. Dabei ist die Zahnkette abtriebsseitig mit Zahnflanken einer Evolventen- Verzahnung ausgestattet und antriebsseitig mit den Zahnflanken der Spitzverzahnung kombiniert. Die Zahnflanken der Evolventen- Verzahnung wälzen in abtriebsseitig zur Zahnkette gerichteten, auch in Kurvenbereichen symmetrischen Aufnahmeöffnungen eines Transportelementes. Das Transportelement ist ein weitestgehend starres Band mit einerseits symmetrischen, nach innen oder außen offenen Aufnahmeöffnungen und andererseits auf der gegenüberliegenden Außenfläche quer zur Laufrichtung verlaufenden beabstandeten Schlitzen ausgestattet, die in einer Außenfläche eines mehreckigen Profilteils eingeformt sind und das Transportelement bilden. Nachteilig an dieser Lösung ist es, dass das Transportelement mit seinen Aufnahmeöffnungen und Schlitzen nur separat in horizontaler oder in vertikaler Richtung an einer Außenfläche anzuordnen und der lineare Kettentrieb darauf zu bewegen ist. Die in der Druckschrift erwähnten Weichen, die einen Wechsel des linearen Kettentriebs von einer horizontalen in eine vertikale Bewegung und umgekehrt ermöglichen sollen, sind weder im Text noch in den Zeichnungen für den Fachmann in einem technisch, prinzipiell erkennbaren konstruktiven Aufbau erkennbar.

Die bekannten Linearantriebstechniken haben unter anderem den Nachteil, dass die Zahnräder abtriebsseitig häufig in Zahnstangen gefiihrt werden, wobei bei einer Spitzverzahnung immer nur 1 Zahn, maximal 1,5 oder 2 Zähne eingreifen können. Rollenketten haben ein zu großes Spiel der Kettenglieder in den Zähnen, wodurch die Ketten an den Gelenken verschleißen und sich ausdehnen, was wiederum zu Ungenauigkeiten in den Einstellungen führt. So dehnen sich Seile beispielsweise bei Seilbahnen und können reißen. Es sind regelmäßige Sicherheitsprüfungen erforderlich, bei denen Ketten oder Seile etc. ausgetauscht werden müssen, die Zeit-, Material- und Kostenaufwendige Abläufe zur Folge haben.

Der besondere Nachteil dieses Standes der Technik besteht darin, dass die an einer äußeren Fläche eines Transportelements geführten Antriebsgeräte, wie linearer Zahnkettentrieb, konzentrischer Getriebemotor usw. müssen in separaten Gehäusen angeordnet und außerhalb des Transportelementes gelagert und transportiert werden, wozu zusätzliche Arbeitsfläche und externer Transport notwendig ist.

Es war deshalb Aufgabe der Erfindung, ein Transportelementen- System zu finden, in dem alle erforderlichen Antriebsgeräte, Stromzufiihrungen und Kopplungselemente, bedarfsweise je nach Anwendungsfall, fortlaufend in einem Gehäuse in einfachen oder dreidimensionalen Richtungen zu bewegen sind und eine räumliche, zylinderförmige oder quadratische oder derart kombinierte Bewegung ermöglichen, einen hohen Wirkungsgrad und eine hohe konstruktive Einfachheit aufweisen, die keine zusätzlichen ortsgebundenen Lagerungsräume für Antriebe usw. erfordern und eine erhebliche Einsparung von Material- und Zeitaufwand gewährleisten.

Die Aufgabe wird mit den Merkmalen des Anspruchs 1 gelöst, indem auf der Grundlage des zugrunde gelegten Standes der Technik ein Transportelementen-System, aufweisend ein Transportelement, bestehend aus einem mehreckigen Profilteil, an dessen einer längsseitigen Fläche ein weitestgehend starres Band angeordnet ist, und einen Laufwagen gebildet ist, die so ineinander eingreifen, dass der Laufwagen innerhalb des Transportelements zu führen und zu bewegen und außerhalb des Transportelements mit einem jeweils angepassten Verbindungselement zur Verbindung und Steuerung von Anwendungen beweglich ist und das Transportelement aus hohlen Profilteilen, die eine lineare Form und eine gebogene Form aufweisen, zusammengesetzt ist, die jeweils in einer Profilfläche, mit einer entlang der Laufrichtung durchgehend verlaufenden Führungsöffnung ausgestattet sind, in denen, auf einer, der Führungsöffnung gegenüberliegenden Innenfläche ein Transportband sowie parallel eine Stromschiene angeordnet sind, die entsprechend der Form der Profilteile, fortlaufend verlaufen,
dass im Transportelement das Transportband symmetrische Aufnahmeöffnungen aufweist, in denen ein linearer Zahnkettentrieb mit einer beidseitig verzahnten und flexiblen Zahnkette, die abtriebsseitig mit Zahnflanken einer EvolventenVerzahnung und antriebseitig mit Zahnflanken einer Spitzverzahnung kombiniert ist und deren abtriebsseitige Zahnflanken in die symmetrischen Aufnahmeöffnungen eingreifen und wälzen und der Zahnkettentrieb in dem Transportelement zu bewegen ist, und das Transportband in einer Auflage rutschfest gelagert ist und das Transportelement neben den hohlen Profilteilen in linearer und gebogener Form auch gegenläufig torsionsförmige Formen aufweist, dass der Laufwagen aus einer Deckfläche mit beidseitig vertikal abgewinkelten Schenkeln besteht, deren Außenfläche ein, zur Kopplung mit der jeweiligen Anwendung angepasstes Verbindungselement aufweist und an der eine einseitig vertikal, mittig und t- förmig angeordneten Trennwand angeordnet ist, an der, horizontal zur Laufrichtung Halterungen mit beidseitig, an gegenüberliegend in vertikaler und horizontaler Richtung angeordneten Rollen gehalten und geführt sind und dass nach Einfiihrung des Laufwagens in das Transportelement, die Deckfläche mit den Schenkeln sowie dem angepassten Verbindungselement des Laufwagens über dem Transportelement herausragt, die Trennwand in die, vertikal zur Laufrichtung angeordnete Führungsöffnung der Transportelemente hineinragt und endseitig auf der Innenfläche zwischen der Auflage mit Transportband und der Stromschiene von den Rollen beweglich geführt ist.

Besonders hervorzuheben ist die erhebliche Variabilität des erfindungsgemäßen Transportelementen- Systems, die durch das Ineinandergreifen eines Transportelements, mit einem Laufwagen gegeben ist, dessen konstruktiver Aufbau den räumlich direkten Kontakt eines linearen Zahnkettentriebs mit einem kompakten, konzentrischen Getriebemotor, den Stromführungselementen und deren Kontaktsicherung mit Anwendungssystemen jeglicher Art gestattet und der mit allem darin angeordneten Geräten innerhalb des Transportelements in allen Richtungen zu bewegen und zu transportieren ist, das je nach Führungsrichtung des Transportbandes in dreidimensionaler Richtung zu bewegen ist. Da das an die jeweilige Anwendung angepasste Verbindungselement, das variabel an der Außenfläche des Deckenteils des, aus dem Transportelement herausragenden, Laufwagens angeordnet ist, werden keine zusätzlichen ortsgebundenen Lagerungsräume oder Gehäuse für Antriebe und deren Zusammenarbeit mit den jeweiligen Anwendungssystemen benötigt. Dadurch wird auch ein höherer Wirkungsgrad erreicht und ein erheblich niedrigerer Material- und Zeitaufwand gewährleistet.

Vorteilhaft ist auch die Konstruktion, gemäß Anspruch 2, indem der unbestückte Laufwagen an der Trennwand und deren Halterungen mit einem linearen Zahnkettentrieb, einem kompakten konzentrischen Getriebemotor, einer Stromversorgung und einem Servoregler, beidseitig, miteinander kooperierend, bestückt sind und innerhalb des Transportelements in horizontaler Richtung, in vertikaler Richtung oder in einer, von der horizontalen oder vertikalen Ebene abgewandten Richtung in der jeweiligen Laufrichtung dreidimensional beweglich sind.

Von Vorteil ist auch der konstruktive Aufbau, nach Anspruch 3, dass der bestückte Laufwagen an den vorderen und hinteren Enden beidseitig zwischen der Innenfläche der Schenkel und den beiden gegenüber liegenden Außenflächen des Transportelements jeweils horizontal mit zwei weiteren Rollen ausgestattet ist, die eine reibungslose Fortbewegung sichern. Dabei wird die Bewegung des bestückten Laufwagens durch die horizontal zur Laufrichtung an den Halterungen der Trennwand mit beidseitig, gegenüberliegend in vertikaler und horizontaler Richtung angeordneten Rollen geführt und gehalten. In Kombination mit den Rollen, die an der Trennwand des Laufwagens angeordnet sind und eine ruhige Bewegungsfiihrung im Inneren des Transportelement gewährleisten, sichern die Rollen zwischen der Außenwand des Transportelements und den Innenflächen der Schenkel am Laufwagen eine stabile Lauflinie des Laufwagens außerhalb am Transportelement.

Hervorzuheben ist auch der konstruktive Aufbau, gemäß Anspruch 4,
dadurch, dass der, an der Trennwand des Laufwagens angeordnete, lineare Zahnkettentrieb mit seiner beidseitig verzahnten Zahnkette die in die Aufnahmeöffnungen des Transportbandes eingreift, das in der Auflage des Transportbandes lagert, das zwischen dem Transortband und der Auflage Magnete aufzunehmen sind und durch den Zahnkettentrieb sowie den ebenfalls im Laufwagen angeordneten, kompakten konzentrischen Getriebemotor anzutreiben und zu bewegen ist.

Besonders hervorzuheben ist der erfindungsgemäß veränderte konstruktive Aufbau des Transportelements, gemäß Anspruch 5, in dem das Transportelement über die Führungsöffnung mit dem, in diesem auf der gegenüberliegenden Innenfläche angeordneten Transportband und der Stromschiene die Vorwärts- und Rückwärtsbewegung sowie dessen Richtung zu bestimmen ist und die Kontaktierung aller zu bewegenden Geräte zur Stromversorgung zu steuern, zu halten und über das jeweilige Verbindungselement untereinander und mit der jeweiligen Anwendung zu verbinden sind.

Das Zusammenwirken der Antriebsteile innerhalb eines Gehäuses, bestehend aus Transportelement und Laufwagen kommt ohne zusätzliches Gehäuse für die Antriebsteile sowie deren Kombination und Bewegung aus, dass bisher außerhalb des Transportelements zusätzlich notwendig ist und erheblichen zusätzlichen Platz benötigt. Außerdem stehen nach der erfindungsgemäßen Transportform die Antriebselemente je nach Anwendungsfall immer vor Ort zur Verfügung und können bei Richtungswechsel mit dem Laufwagen im Transportelement mitgeführt werden.

Hervorzuheben ist auch der Konstruktive Aufbau des erfindungsgemäßen Transportelements, gemäß Anspruch 6 und 7, indem mehrere einschienige Transportelemente in zu bestimmender Reihenfolge aus Profilteilen linearer und bogenförmiger Form und gegenläufig torsionsförmiger Form miteinander zu verbinden sind und in den ein oder mehrere Antriebe beweglich gelagert sind, die über angeordnete Weichen auch in dreidimensionaler Richtung zu bewegen sind. Dabei sind die Weichen durch, über oder unter dem Linearbereich des jeweiligen Transportelements angeordnet, die zusätzlich in bogenförmiger oder y- förmiger Richtung einzelne Antriebe über die zugehörigen Laufwagen bedarfsweise steuern.

Je nach Anwendungsfall kann der lineare Zahnkettentrieb mit mehreren synchronisierten Antrieben auf einfache Weise übergangslos vertikal und horizontal gefahren werden. Dazu erforderliche Transportelemente sind durch das bedarfsweise Zusammensetzen von linearen, gebogenen oder torsionsförmigen hohlen Profilteilen zu erreichen. Bei unterbrochenem Zahneingriff kann sich die Zahnkette sowohl in x-, y- und z- Richtungen frei bewegen. Bei einem torsionsförmigen einschienigen hohlen Profilteil kann sich mit dem vorhandenen Spiel zwischen den Kettenlamellen die Schrägstellung der Kette problemlos ausgleichen. Durch Verdrehen des torsionsförmigen hohlen Profilteils um 90° kann die Zahnkette bei Bogenfahrten in die positive konvexe Lage gebracht werden, wodurch die Zahnkette gespannt wird.

Schließlich ist auch eine konstruktive Form, gemäß Anspruch 8, hervorzuheben, indem mehrere Transportelementen- Systeme, deren Transportelemente durch Anordnung einer jeweils gleichen Reihenfolge bestimmter einschieniger Profilformen sowie weiterer, einzeln angepasster mehrschieniger Profilformen mit einer Führungsöffnung eine einheitliche Linienführung aufweisen, und aus denen jeweils ein Laufwagen mit einem Verbindungselement herausragt, die in einem zu definierenden Abstand zueinander angeordnet sind, die bei den mehrschienigen Profilen eine Helix und insgesamt einen Freiraum bilden, wobei der Laufwagen im Inneren des jeweiligen Transportelements über den linearen Zahnkettentrieb in die Aufnahmeöffnungen des Transportbandes auf der jeweiligen Innenfläche in den Transportelementen und über den konzentrischen Getriebemotor zu bewegen ist und eine räumlich, quadratische oder zylinderförmige, beidseitig zu schließende, Transportbox mit einem drehbaren Deckenteil und Bodenteil durch Verbindungselemente mit dem Laufwagen in fortlaufend vertikaler Lage verbunden ist, von diesem gehalten wird und innerhalb des Freiraumes spiralförmig drehbar und gleichzeitig vertikal beweglich ist.

Die Erfindung soll nachstehend anhand von Ausführungs- bzw. Anwendungsbeispielen beschrieben werden, die in den Zeichnungen näher dargestellt sind. Dabei zeigt:
Fig.1 prinzipielle Vorderansicht eines Transportelementen- Systems mit Transportelement und eingesetztem unbestückten Laufwagen,
Fig.2 eine Vorderansicht von einem bestückten Transportelementen- System, bestehend aus Deckenteil mit abgewinkelten Schenkeln und Verbindungelement zu einer Anwendung, Trennwand und Halterungen sowie Getriebemotor, linearer Zahnkettentrieb, Servoregler, Stromzuführung und Rollen zur Führung des Laufwagens,
Fig. 3 einen 3D- Ausschnitt durch eine prinzipielle Seitenansicht eines bestückten Transportelementen- Systems,
Fig.4 die prinzipielle Darstellung eines linearen, aus mehreren Hohlprofilen zusammengesetzten Transportelements aus einschienigen geraden, bogenförmigen und torsionsförmigen hohlen Profilteilen mit mehreren außenliegenden Deckenteilen des Transporwagens und innen laufenden Antrieben in den Transportelementen,
Fig.4.1 die Seitenansicht eines Hohlprofils linear mit Führungsöffnung als geradliniges Profil eines Transportelements,
Fig.4.2 die Seitenansicht eines torsionsförmigen Holprofils, in einer Richtung mit Führungsöffnung als Profil eines Transportelements,
Fig.4.3 die Seitenansicht eines torsionsförmigen Hohlprofils in einer entgegengesetzten Richtung von 4.2. mit Führungsöffnung eines Transportelements,
Fig.4.4 die Seitenansicht eines bogenförmigen Hohlprofils mit Führungsöffnung, eines Transportelements,
Fig.5 die Grafik einer Weiche in geradliniger Fahrt,
Fig.5.1 die Grafik einer Weiche in bogenlinienförmiger Fahrt,
Fig.6 eine Helixansicht mit vier, im Quadrat angeordneten Transportelementen-Systemen mit vier in den Transportelementen implimentierten Antrieben in deren Mitte eine Transportbox, über Verbindungselemente mit den Transportelementen-Systemen beweglich verbunden ist.

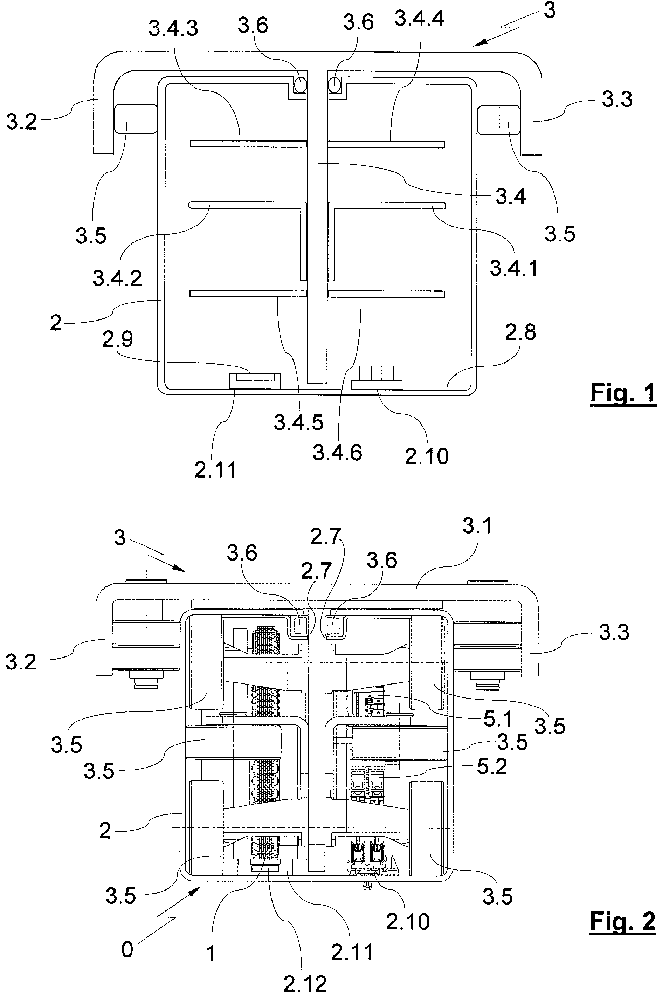

Ein Ausführungsbeispiel, gemäß Fig.1, zeigt eine Vorderansicht in ein Transportelementen- System 0, mit einem beispielsweise quadratischen Transportelement 2 und einen in das Transportelement 2 eingesetzten Laufwagen 3. Dabei ist das Transportelement 2 mit einer durchgehend offenen Führungsöffnung 2.7 ausgestattet, deren Kanten beispielsweise beidseitig nach innen geradlinig in vertikaler Richtung eingeformt und von dort rechtwinklig bis zur Trennwand. 3.4 des Transportelements 2 geformt sind. Im Innenraum des Transportelements 2 ist auf einer der Führungsöffnung 2.7 gegenüberliegend befindlichen Innenfläche 2.8 ein, in Richtung der Führungsöffnung 2.7 verlaufendes Transportband 2.9 angeordnet, das Aufnahmeöffnungen 2.1 aufweist und auf beispielsweise angeordneten Magneten 2.12 und einer darunterliegenden Auflage 2.11 rutschfest befestigt ist. Parallel in einer Ebene ist neben dem Transportband 2.9 eine Stromfiihrungsschiene 2.10 ebenfalls in Richtung der Führungsöffnung 2.7 und des Transportbandes 2.9 eingebaut, die zusammen das unbestückte Transportelement 2 bilden. Der Laufwagen 3 weist eine T- förmige Grundform
auf. Dabei ist eine Deckfläche 3.1 an ihren beiden Enden mit vorzugsweise angeformten, vertikal verlaufenden Schenkeln 3.2 und 3.3 ausgestattet, an deren Außenfläche ein der jeweiligen Anwendung angepasstes Verbindungselement 4 vorzugsweise mit dem Deckenteil 3.1 fest verschweißt ist,

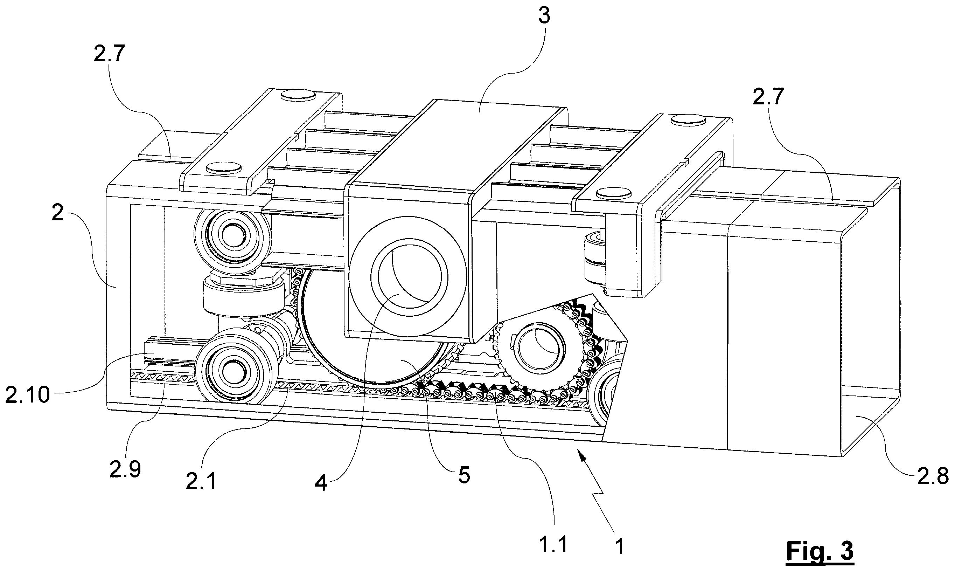

In der gleichen vertikalen Richtung ist mittig und T- förmig eine Trennwand 3.4 angeordnet, die ebenfalls vorzugsweise mit dem Deckenteil 3.1 verschweißt ist. An der Trennwand 3.4 sind horizontal zur Laufrichtung Halterungen 3.4.1, 3.4.2, 3.4.3, 3.4.4, 3.4.5 und 3.4.6 beispielsweise lösbar verschraubt, die beidseitig in gleicher Breite von der Trennwand 3.4 weggerichtet sind. Die Länge der Trennwand 3.4 entspricht etwa der inneren Länge des jeweiligen Transportelements 2. An den Halterungen 3.4.1, 3.4.2, 3.4.2, 3.4.3, 3.4.4, 3.4.5 und 3.4.6 sind beidseitig, an gegenüberliegend in vertikaler und horizontaler Richtung angeordnete Rollen 3.5 gehalten und geführt. Der Laufwagen 3 wird nun, gemäß Fig. 2 und Fig.3 mit einem linearen Zahnkettentrieb 1, einem konzentrischen Getriebemotor 5, einem Servoregler 5.1 und einer Stromzuführung 5.2 sowie mit den Rollen 3.5 vorzugsweise mechanisch verschraubt. Bei Einführung des bestückten Laufwagens 3 in das Transportelement 2 kommt das Deckenteil 3.1 in Bewegungsrichtung außen auf dem Oberteil des Transportelements 2 zu liegen. Die abgewinkelten angeformtem Schenkel 3.1 und 3.3 verlaufen dabei rechts und links vertikal vom Deckenteil 3.1 zum Transportelement 2 hin. Die bestückte Trennwand 3.4 wird von vorn in Bewegungsrichtung in die Führungsöffnung 2.7 des Transportelements 2 eingeführt, wodurch der lineare Zahnkettentrieb 1, der mit diesem verbundene konzentrische Getriebemotor 5, der Servoregler 5.1 und die Stromzuführung 5.2 und die Rollen 3.5 rechts und links neben der Trennwand 3.4 in den Hohlraum des Transportelements 2 eingeführt wird. Wichtig ist bei der Einführung, dass, gemäß Fig 3, die Zähne der doppelseitig verzahnten Zahnkette 1.1 antriebsseitig mit den Aufnahmeöffnungen 2.1 des Transportbandes 2.9 des Transportelements 2 eingreifen mit der Evolventen- Verzahnung in die Zahnräder des konzentrischen Getriebemotors 5 eigreifen und von diesem einerseits antriebsseitig der lineare Zahnkettentrieb 1 und abtriebseitig eine auszuwählende Anwendung angetrieben wird. Durch die, in den Zeichnungen nicht näher dargestellten Stromführungs- und -verbindungselenente werden alle Transportbewegungen und Fortbewegungen für die Laufwagen 3 mit den zu bewegenden Geräten und einer Transportbox 7 gesteuert. Danach muss die Dichtung 3.6 in die Nut der Führungsöffnung 2.7 eingesetzte werden, damit keine Feuchtigkeit und Staub in das Innere der Transportelementen- Systeme 0 eindringen kann.

In einem zweiten Ausführungsbeispiel, gemäß Fig. 4, wird eine einschienige lineare dreidimensionale Anwendungsform des erfindungsgemäßen Transportelementen- Systems 0 mit beispielsweise drei Antrieben angeordnet, deren Laufwagen 3 aus den durchgehenden Führungsöffnungen 2.7 herausragen, dargestellt. In diesem Beispiel ist ein aus unterschiedlich gestalteten Transportelementen 2 mit Hilfe von beispielhaft dargestellten einschienigen Grundprofilen 2.3, 2.4, 2.5 und 2.6 bedarfsweise zusammengesetzt, die in den Fig. 4.1, 4.2, 4.3, 4.4 dargestellt sind. In der Reihenfolge mit Profilen gebogen 2.4, torsionsförmig mit Linksdrall 2.5, torsionsförmig mit Rechtsdrall 2.6, nochmals gebogen 2.4 und gerade 2.3 sind diese zusammengesetzt. Bei der dreidimensionalen einschienigen Anwendungsform wird beispielsweise ein geradlinig hohles Profil 2.3 in vertikaler Richtung in einer y- Achse, danach ein bogenförmiges Profils 2.4 in waagerechter Richtung in einer x-Achse geführt, darauffolgend zwei torsionsförmige Profile 2.6 und 2.5, danach ein weiteres bogenförmigen Profil 2.4 in eine von der waagerechten Form abgewandten Richtung in einer z-Achse mit einem geradlinigen Profilteil 2.3 angeordnet. Die torsionsförmigen Profilteile stehen bedarfsweise durch Drehung um 90° mit einem Linksdrall oder einem Rechtsdrall zur Verfügung. In allen aneinandergereihten Transportelemententeilen 2 sind durchgängig Führungsöffnungen 2.7 in einer Außenfläche jedes Transportelements 2 angeordnet. Im Inneren der Transportelemente 2 sind auf der Innenfläche 2.8, die der Führungsöffnung 2.7 gegenüberliegt, ein Transportband 2.9 mit eingearbeiteten Aufnahmeöffnungen 2.1, das beispielsweise auf Magneten 2.12 und danach auf einer Auflage 2.11 rutschfest auf der Innenfläche 2.8 angeordnet und parallel daneben eine Stromschiene 2.10, die in den Zeichnungen Fig. 4. 1 bis 4.4 verdeckt mit Ziffern gekennzeichnet sind.

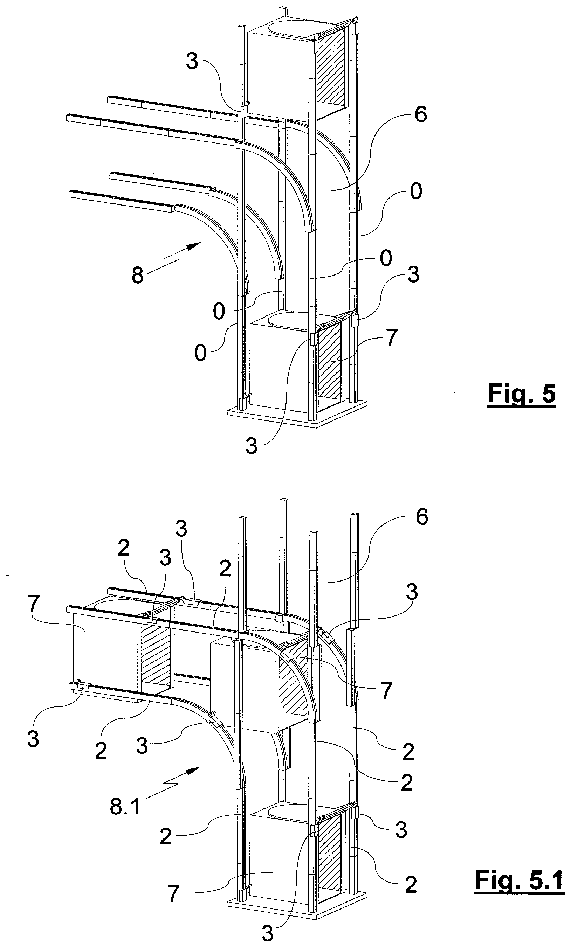

In einem 3. Ausführungsbeispiel ist eine geradlinige Weiche 8, gemäß Fig. 5 dargestellt. Diese Weichenform kann auch bogenförmig, gemäß Fig.5.1 genutzt werden. Es sind im Beispiel ausschließlich einschienige gerade Profile 2.3 und bogenförmige Profile 2.4 miteinander verbunden. Dabei werden beispielsweise vier komplette Transportelementen- Systeme 0, in denen vorzugsweise 8 Antriebe angeordnet sind, deren Laufwagen 3 aus den Führungsöffnungen 2.7 herausragen, einander derart zugeordnet, dass sie beispielsweise einen quadratischen Hohlraum 6 bilden, in dem, gemäß Fig. 5, eine Transportbox 7 geradlinig vertikal zu bewegen ist. Fig. 5.1 zeigt, dass mit den geradlinigen Transportelementen-Systemen 0 jeweils ein bogenförmiges Transportelementen- System 0 zusammengesetzt ist, in die die jeweiligen Transportboxen 7 durch die Antriebe bogenförmig steuerbar sind. Auch ein y- förmiger Weichenanschluss ist auf diese Weise möglich.

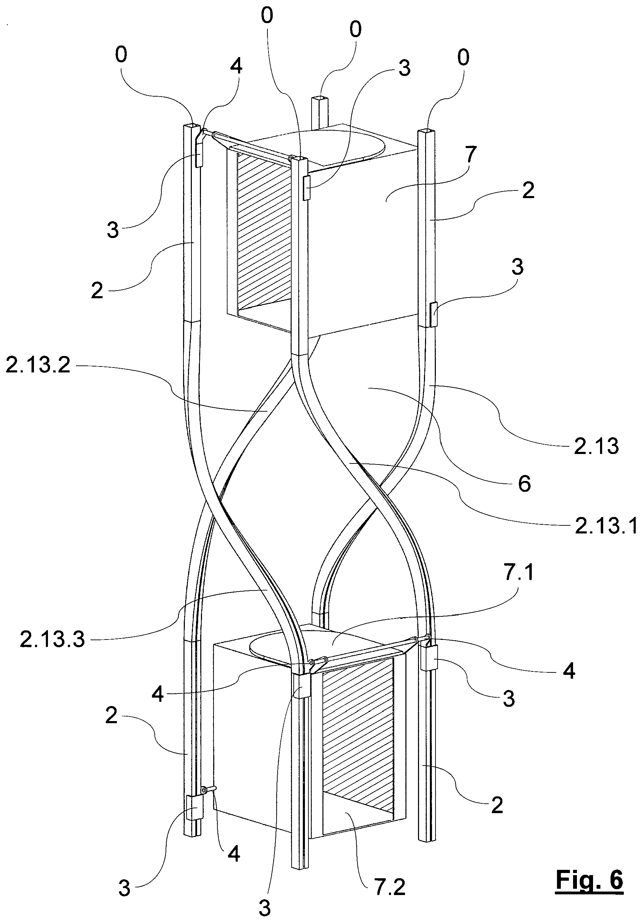

Schließlich wird ein viertes Ausführungsbeispiel, gemäß Anspruch 8 in Fig.6 dargestellt. In diesem Bespiel werden vorzugsweise vier Transportelementen-Systeme zugrunde gelegt, deren Transportelemente 2 durch Anordnung einer jeweils gleichen Reihenfolge bestimmter einschieniger Profilformen 2.3 und mehrschieniger Profilformen 2.13, 2.13.1, 2.13.2 und 2.13.3 rechtsdrallig oder linksdrallig mit einer Führungsöffnung 2.7 eine einheitliche Linienführung aufweisen, aus denen jeweils ein Laufwagen 3 mit einem Verbindungselement 4 herausragt, die in einem zu definierenden Abstand zueinander angeordnet sind. Im vorliegenden Ausführungsbeispiel sind zwischen den einschienigen Profilen 2,3 in vertikaler Richtung vorzugsweise mehrschienige Profilteile 2.13, 2.13.1, 2.13.2 und 2.13.3 vorzugsweise rechtsdrallig angeordnet, deren Führungsöffnungen 2.7, je nach Anwendungsbedingungen, wie Transportweg, Kurvenwinkel etc. jeweils einzeln bearbeitet werden müssen und die eine Helix bilden. Innerhalb der Transportelementen- Systeme 0 wird über die Gesamtlänge ein Hohlraun 6 gebildet, wobei der Laufwagen 3 im inneren des jeweiligen Transportelements 2 über den linearen Kettentrieb 1 in die Aufnahmeöffnungen 2.1 des Transportbandes 2.9 auf der jeweiligen Innenfläche 2.8 in den Transportelementen 2 und über den konzentrischen Getriebemotor 5 zu bewegen sind. Die im Freiraum 6 geführte räumlich quadratische oder zylinderförmige, beidseitig zu schließende Transportbox 7 mit einem drehbaren Deckenteil 7.1 und einem Bodenteil 7.2 ist durch Verbindungselemente 4 mit den Laufwagen 3 in fortwährend vertikaler Lage verbunden, wobei sie von den Verbindungselementen 4 gehalten wird und innerhalb des Freiraumes 6 spiralförmig und gleichzeitig vertikal beweglich ist.

### Aufstellung der verwendeten Bezugszeichen

0. Transportelementen- System,
1. linearer Zahnkettentrieb,
1.1 Zahnkette,
2. Transportelement,
2.1 Aufnahmeöffnungen,
2.2
2.3 einschieniges, geradliniges Hohlprofil,
2.4 einschieniges, bogenförmiges Hohlprofil,
2.5 einschienige, torsionsförmiges Hohlprofil mit Linksdrall,
2.6 einschieniges, torsionsförmiges Hohlprofil mit Rechtdrall,
2.7 Führungsöffnung,
2.8 Innenfläche im Transportelement gegenüber der Führungsöffnung 2.7,
2.9 Transportband mit Aufnahmeöffnungen und Schlitzen im Transportelement,
2.10 Stromschiene auf Innenfläche 2.8 im Transportelement,
2.11 Auflage,
2.12 Magnete,
2.13 mehrschieniges, torsionsförmiges Hohlprofil, rechtsdrallig oder linksdrallig,
2.13.1mehschieniges, torsionsförmiges Hohlprofil, rechtsdrallig oder linksdrallig
2.13.2mehrschieniges, torsionsförmiges Hohlprofil, rechtsdrallig oder linksdrallig
2.13.3mehtschieniges, torsionsförmiges Hohlprofil, rechtsdrallig oder linksdrallig
3 Laufwagen,
3.1 Deckfläche des Laufwagens,
3.2 Abgewinkelter Schenkel rechts an der Deckfläche,
3.3 Abgewinkelter Schenkel links an der Deckfläche,
3.4 Trennwand,
   Halterung an Trennwand rechts,
3.4.1 Halterung an Trennwand links,
3.4.2 Halterung an Trennwand links,
3.4.3 Halterung an Trennwand rechts,
3.4.4 Halterung an Trennwand links,
3.4.5 Halterung an Trennwand rechts,
3.5 Rollen,
3.6 Dichtung,
4. Verbindungselement zwischen Laufwagen und Anwendungen,
5. konzentrischer Getriebemotor,
5.1 Servoregler,
5.2 Stromzuführung
6. Hohlrauin,
7. Transportbox,
7.1 Deckenteil von 7,
7.2 Bodenteil von 7,
8. Weiche geradlinig,
8.1 Weiche abbiegend,

## Patentansprüche

1. Transportelementen- System (0), das aus einem ein Transportelement (2), bestehend aus einem mehreckigen Profilteil, an dessen einer längsseitigen Fläche ein weitestgehend starres Band angeordnet ist, und einem Laufwagen gebildet ist, die so ineinander eingreifen, dass der Laufwagen (3) innerhalb des Transportelements (2) zu führen und zu bewegen und außerhalb des Transportelements (2) mit einem jeweils angepassten Verbindungselement (4) zur Verbindung und Steuerung von Anwendungen beweglich ist und das Transportelement (2) aus hohlen Profilteilen, die eine lineare Form (2.3) und eine gebogene Form (2.4) aufweisen, zusammengesetzt ist, die jeweils in einer Profilfläche, mit einer entlang der Laufrichtung durchgehend verlaufenden Führungsöffnung (2.7) ausgestattet sind, in denen, auf einer, der Führungsöffnung (2.7) gegenüberliegenden Innenfläche (2.8) ein Transportband (2.9) sowie parallel eine Stromschiene (2.10) angeordnet sind, die entsprechend der Form der Profilteile, fortlaufend verlaufen,
**dadurch gekennzeichnet, dass** im Transportelement (2) das Transportband (2.9) symmetrische Aufnahmeöffnungen (2.1) aufweist, in denen ein linearer Zahnkettentrieb (1) mit einer beidseitig verzahnten und flexiblen Zahnkette (1.1), die abtriebsseitig mit Zahnflanken einer Evolventen- Verzahnung und antriebseitig mit Zahnflanken einer Spitzverzahnung kombiniert ist und deren abtriebsseitige Zahnflanken in die symmetrischen Aufnahmeöffnungen (2.1) eingreifen und wälzen, der Zahnkettentrieb (1) in dem Transportelement (2) zu bewegen ist, das Transportband (2.9) in einer Auflage (2.11) rutschfest gelagert ist und neben den hohlen Profilteilen in linearer und gebogener Form (2.3 und 2.4) auch in gegenläufig torsionsförmiger Form (2.5 und 2.6) aufweist,
**dadurch gekennzeichnet, dass** der Laufwagen (3) aus einer Deckfläche (3.1) mit beidseitig vertikal abgewinkelten Schenkeln (3.2, 3.3) besteht, deren Außenfläche ein, zur Kopplung mit der jeweiligen Anwendung angepasstes Verbindungselement (4) aufweist und an der eine einseitig vertikal, mittig und t-förmig angeordneten Trennwand (3.4) angeordnet ist, an der, horizontal zur Laufrichtung Halterungen (3.4.1, 3.4.2, 3.4.3, 3.4.4, 3.4.5, 3.4.6) mit beidseitig, an gegenüberliegend in vertikaler und horizontaler Richtung angeordneten Rollen (3.5) gehalten und geführt sind und
**dadurch gekennzeichnet, dass** nach Einführung des Laufwagens (3) in das Transportelement (2), die Deckfläche (3.1) mit den Schenkeln (3.2, 3.3) sowie dem angepassten Verbindungselement (4) des Laufwagens (3) über dem Transportelement (2) herausragt, die Trennwand (3.4) in die, vertikal zur Laufrichtung angeordnete Führungsöffnung (2.7) der Transportelemente (2) hineinragt und endseitig auf der Innenfläche (2.8) zwischen der Auflage (2.11) mit Transportband (2.9) und der Stromschiene (2.10) von den Rollen (3.5) beweglich geführt ist.

2. Transportelementen- System (0) nach Anspruch 1, **dadurch gekennzeichnet, dass** der unbestückte Laufwagen (3) an der Trennwand (3.4) und deren Halterungen (3.4.1, 3.4.2, 3.4.3, 3.4.4, 3.4.5, 3.4.6) mit einem linearen Zahnkettentrieb (1), einem kompakten konzentrischen Getriebemotor (5), einer Stromversorgung (5.1) und einem Servoregler (5.2) beidseitig, miteinander kooperierend, bestückt und innerhalb des Transportelements (2) in horizontaler Richtung (x), in vertikaler Richtung (y) oder in einer, von der horizontalen oder vertikalen Ebene abgewandten Richtung (z) in der jeweiligen Laufrichtung beweglich ist.

3. Transportelementen- System (0) nach Anspruch 2, **dadurch gekennzeichnet, dass** der bestückte Laufwagen (3) an den vorderen und hinteren Enden beidseitig zwischen der Innenfläche der Schenkel (3.2. 3.3) und den beiden gegenüber liegenden Außenflächen des Transportelements (2) jeweils horizontal mit zwei weiteren Rollen (3.5) ausgestattet ist.

4. Transportelementen- System (0) nach Anspruch 3, **dadurch gekennzeichnet, dass** der an der Trennwand (3.4) des Laufwagens (3) angeordnete lineare Zahnkettentrieb (1) mit seiner beidseitig verzahnten Zahnkette (1.1), die in den Aufnahmeöffnungen (2.1) des Transportbandes (2.9) eingreift, das in der Auflage (2.11) des Transportelements (2) lagert, das zwischen dem Transportband (2.9) und der Auflage (2.11) Magnete (2.12) aufzunehmen sind und durch den Zahnkettentrieb (1) sowie den ebenfalls im Laufwagen (3) angeordneten, kompakten konzentrischen Getriebemotor (5) anzutreiben und zu bewegen ist.

5. Transportelementen- System (0) nach Anspruch 1, **dadurch gekennzeichnet, dass** in dem Transportelement (2) über die Führungsöffnung (2.7) mit dem, in diesem auf der gegenüber liegenden Innenfläche (2.8) angeordneten Transportband (2.9) und der Stromschiene (2.10) die Vorwärts- und Rückwärtsbewegung des Antriebs sowie dessen Richtung zu bestimmen ist und die Kontaktierung aller zu bewegenden Geräte zur Stromversorgung zu steuern, zu halten und über das jeweilige Verbindungselement (4) untereinander und mit der jeweiligen Anwendung zu verbinden sind.

6. Transportelementen- System (0) nach Anspruch 1, **dadurch gekennzeichnet, dass** mehrere einschienige Transportelemente (2) in zu bestimmender Reihenfolge aus Profilteilen linearer und bogenförmiger Form (2.3, 2.4) und gegenläufig torsionsförmiger Form (2.5, 2.6) miteinander zu verbinden sind und in denen ein oder mehrere Antriebe beweglich gelagert sind, die über angeordnete Weichen (8) auch in dreidimensionaler Richtung beweglich sind.

7. Transportelementen- System (0) nach Anspruch 6, **dadurch gekennzeichnet, dass** die Weichen (8) durch, über oder unter dem Linearbereich des jeweiligen Transportelementes (2) zusätzlich gebildet sind, die in bogenförmiger oder y- förmiger Richtung einzelne Antriebe über die zugehörigen Laufwagen (3) steuern.

8. Transportelementen- System (0) nach Anspruch 1, **dadurch gekennzeichnet, dass** mehrere Transportelementen- Systeme (0), deren Transportelemente (2) durch Anordnung einer jeweils gleichen Reihenfolge bestimmter einschieniger Profilformen (2.3, 2.4, 2.5, 2.6) sowie weiterer, einzeln angepasster mehrschieniger Profilformen (2.13, 2.13.2, 2.13.3, 2.13.4) mit einer Führungsöffnung (2.7) eine einheitliche Linienführung aufweisen, und aus denen jeweils ein Laufwagen (3) mit einem Verbindungselement (4) herausragt, die in einem zu definierenden Abstand zueinander angeordnet sind, die bei den mehrschienigen Profilen (2.13, 2.13.2, 2.13.3, 2.13.4) eine Helix und insgesamt einen Freiraum (6) bilden, wobei der Laufwagen (3) im Inneren des jeweiligen Transportelements (2) über den linearen Kettenantrieb (1) in die Aufnahmeöffnungen (2.1) des Transportbandes (2.9) auf der jeweiligen Innenfläche (2.8) in den Transportelementen (2) und über den konzentrischen Getriebemotor (5) zu bewegen ist und eine räumlich, quadratische oder zylinderförmiger, beidseitig zu schließende Transportbox (7) mit einem drehbaren Deckenteil (7.1) und Bodenteil (7.2) durch Verbindungselemente (4) mit dem Laufwagen (3) in fortlaufend vertikaler Lage verbunden ist, von diesem gehalten wird und innerhalb des Freiraumes (6) spiralförmig drehbar und gleichzeitig vertikal beweglich ist.

## Claims

1. Transport element system (0), formed from a transport element (2) which consists of a polygonal profiled part, on one longitudinal side surface of which is arranged a mostly rigid belt, and a trolley, the belt and trolley engaging in one another such that the trolley (3) is guided and moves inside the transport element (2) and is movable outside the transport element (2) with a connection element (4) adapted in each case for connection and control of applications, and the transport element (2) is made up of hollow profiled parts that have a linear form (2.3) and a bent form (2.4), the profiled parts being equipped, in a respective profiled surface, with a guide opening (2.7) which runs continuously along the running direction, a transport belt (2.9) as well as a parallel busbar (2.10) being arranged in the profiled parts on an inner surface (2.8) opposite to the guide opening (2.7), the transport belt and busbar continuously running correspondingly to the form of the profiled parts,
**characterized in that** in the transport element (2), the transport belt (2.9) has symmetrical receiving openings (2.1) in which a linear toothed chain drive (1) is to be moved that has a toothed chain (1.1) that is toothed and flexible on both sides, the chain combining tooth flanks of an involute gearing on the output side and tooth flanks of a serration gearing on the drive side, and output-side tooth flanks of which engaging and rolling in the symmetrical receiving openings (2.1), the toothed chain drive (1) is to be moved in the transport element (2), the transport belt (2.9) is mounted against slipping in a support (2.11)
and in addition to the hollow profiled parts has in linear and curved form (2.3 and 2.4) also in opposite torsional form (2.5 and 2.6),
**characterized in that** the trolley (3) consists of a cover surface (3.1) with vertically deflected legs (3.2, 3.3) on both sides, the outer surface of which having an adapted connection element (4) for coupling to the respective application and a separating wall (3.4) that is vertical, centered and t-shaped on one side being arranged thereon, holders (3.4.1, 3.4.2, 3.4.3, 3.4.4, 3.4.5, 3.4.6) having opposite rollers (3.5) arranged on both sides that are held and guided on the separating wall (3.4) opposite in the vertical and horizontal direction and
**characterized in that** after introducing the trolley (3) into the transport element (2), the cover surface (3.1) with the legs (3.2, 3.3) and the adapted connection element (4) of the trolley (3) protrudes out above the transport element (2), the separating wall (3.4) protrudes into the guide opening (2.7) of the transport elements (2) arranged vertical to the running direction and at the end is movably guided on the inside surface (2.8) between the support (2.11) with the transport belt (2.9) and the busbar (2.10) by the rollers (3.5).

2. Transport element system (0) according to claim 1, **characterized in that** the unpopulated trolley (3) is populated, on the separating wall (3.4) and its holders (3.4.1, 3.4.2, 3.4.3, 3.4.4, 3.4.5, 3.4.6), with a linear toothed chain drive (1), a compact concentric gear motor (5), a power supply (5.1) and a servo-regulator (5.2) on both sides cooperating with each other, and movable inside the transport element (2) in the horizontal direction (x), in the vertical direction (y) or in a direction (z) that deviates from the horizontal or vertical plane in the respective running direction.

3. Transport element system (0) according to claim 2, **characterized in that** the populated trolley (3) is equipped, on the front and rear ends on both sides, between the inside surface of the legs (3.2. 3.3) and the two opposite outside surfaces of the transport element (2), with two further rollers (3.5) in each case horizontally.

4. Transport element system (0) according to claim 3, **characterized in that** the linear toothed chain drive (1), which is arranged on the separating wall (3.4) of the trolley (3), with its toothed chain (1.1) which is toothed on both sides, which engages in the receiving openings (2.1) of the transport belt (2.9), that mounts in the support (2.11) of the transport element (2), the magnets (2.12) are to be received between the transport belt (2.9) and the support (2.11) and the compact, concentric gear motor (5), which is also arranged in the trolley (3), are to be driven and moved.

5. Transport element system (0) according to claim 1, **characterized in that** in the transport element (2) via the guide opening (2.7) with the transport belt (2.9) arranged therein on the opposite inside surface (2.8) and the busbar (2.10), the forward and backward movement of the drive and its direction is to be determined and the contacting of all devices which are to move to the power supply is to be controlled, to be held and to be connected together via the respective connection element (4) and to the respective application the contacting of all devices to be moved.

6. Transport element system (0) according to claim 1, **characterized in that** a plurality of single-rail transport elements (2) in a sequence to be determined made of profiled parts of linear and curved form and opposite torsional form are to be connected together and in which one or more drives are movably mounted which are movable via arranged points (8), also in three-dimensional direction.

7. Transport element system (0) according to claim 6, **characterized in that** the points (8) are additionally formed through, over or under the linear region of the respective transport element (2) which control individual drives via the associated trolley (3) in the curved or y-shaped direction.

8. Transport element system (0) according to claim 1, **characterized in that** a plurality of transport systems (0) whose transport elements (2) have, by arranging a respective same sequence of certain single-rail profile shapes (2.3, 2.4, 2.5, 2.6) and further, individually adapted multi-rail profile shapes (2.13.1, 2.13.2, 2.13.3, 2.13.4) with a guide opening (2.7), a uniform line guide, and from which, respectively, a trolley (3) protrudes with a connection element (4) which are arranged at a distance from one another to be defined which form a helix in the multi-rail profiles (2.13.1, 2.13.2, 2.13.3, 2.13.4) and overall form a free space (6), wherein the trolley (3) is to be moved inside the respective transport element (2) via the linear chain drive (1) to the receiving openings (2.1) of the transport belt (2.9) on the respective inside surface (2.8) in the transport elements (2) and is to be moved via the concentric gear motor (5) and a spatial, quadratic or cylindrical transport box (7) to be closed on both sides is to be connected to the trolley (3) in continuous vertical position with a rotatable cover part (7.1) and bottom part (7.2) by connection elements (4), held by it and is spirally rotatable and at the same time vertically movable inside of the free space (6).

## Revendications

1. Système d'éléments de transport (0) qui est formé par un élément de transport (2) constitué d'une pièce profilée polygonale, sur une surface longitudinale de laquelle est disposée une bande largement rigide, et un chariot, qui s'engagent l'un dans l'autre de telle manière que le chariot (3) est à guidé et déplacé à l'intérieur de l'élément de transport (2) et est mobile à l'extérieur de l'élément de transport (2) avec un élément de liaison (4) respectivement adapté pour la liaison et la commande d'applications et l'élément de transport (2) est composé de pièces profilées creuses, qui présentent une forme linéaire (2.3) et une forme courbe (2.4), qui sont respectivement équipées dans une surface profilée d'une ouverture de guidage (2.7) s'étendant en continu le long de la direction de déplacement, dans laquelle, sur une surface intérieure (2.8) opposée à l'ouverture de guidage (2.7), sont disposés une bande de transport (2.9) et un rail conducteur parallèle (2.10) qui s'étendent en continu selon la forme des pièces profilées,
**caractérisé en ce que,** dans l'élément de transport (2), la bande de transport (2.9) présente des ouvertures de réception symétriques (2.1), dans lesquelles un entraînement par chaîne dentée linéaire (1) avec une chaîne dentée double face et flexible (1.1), qui est combinée côté sortie avec des flancs de dents d'une denture en développante et côté entrée avec des flancs de dents d'une denture pointue et dont les flancs de dents côté sortie s'engagent et roulent dans les ouvertures de réception symétriques (2.1), pour déplacer l'entraînement par chaîne dentée (1) dans l'élément de transport (2), la bande de transport (2.9) est montée de manière antidérapante dans un support (2.11) et présente, en plus des pièces profilées creuses de forme linéaire et courbe (2.3 et 2.4), également de forme torsionnelle contrarotative (2.5 et 2.6),
**caractérisé en ce que** le chariot (3) est constitué d'une surface de recouvrement (3.1) avec des branches inclinées verticalement (3.2, 3.3) des deux côtés, dont la surface extérieure présente un élément de liaison (4) adapté pour l'accouplement avec l'application respective et sur laquelle est disposée une paroi de séparation (3.4) disposée verticalement d'un côté, au centre et en forme de T, sur laquelle, horizontalement par rapport à la direction de marche, des supports (3.4.1, 3.4.2, 3.4.3, 3.4.4, 3.4.5, 3.4.6) avec des rouleaux (3.5) disposés en face l'un de l'autre dans la direction verticale et horizontale sont maintenus et guidés des deux côtés, et
**caractérisé en ce que** après l'introduction du chariot (3) dans l'élément de transport (2), la surface de recouvrement (3.1) avec les branches (3.2, 3.3) ainsi que l'élément de liaison adapté (4) du chariot (3) ressort de l'élément de transport (2), la paroi de séparation (3.4) dépasse en saillie dans l'ouverture de guidage (2.7) des éléments de transport (2) disposée verticalement par rapport à la direction de marche et est guidée de manière mobile à l'extrémité sur la surface intérieure (2.8) entre le support (2.11) avec la bande de transport (2.9) et le rail conducteur (2.10) par les rouleaux (3.5).

2. Système d'éléments de transport (0) selon la revendication 1, **caractérisé en ce que** le chariot non équipé (3) sur la paroi de séparation (3.4) et ses supports (3.4.1, 3.4.2, 3.4.3, 3.4.4, 3.4.5, 3.4.6) avec un entraînement par chaîne dentée linéaire (1), un moteur à engrenage concentrique compact (5), une alimentation électrique (5.1) et un servo-contrôleur (5.2) des deux côtés, coopérant entre eux, équipés et à l'intérieur de l'élément de transport (2) est mobile dans la direction horizontale (x), dans la direction verticale (y) ou dans une direction opposée au plan horizontal ou vertical (z) dans la direction de déplacement respective.

3. Système d'éléments de transport (0) selon la revendication 2, **caractérisé en ce que** le chariot équipé (3) est équipé de deux autres rouleaux (3.5) horizontalement aux extrémités avant et arrière des deux côtés entre la surface intérieure des branches (3.2, 3.3) et les deux surfaces extérieures opposées de l'élément de transport (2).

4. Système d'éléments de transport (0) selon la revendication 3, **caractérisé en ce que** l'entraînement par chaîne dentée linéaire (1) disposé sur la paroi de séparation (3.4) du chariot (3) s'engage avec sa chaîne dentée double face (1.1) dans les ouvertures de réception (2.1) de la bande de transport (2.9) montée dans le support (2.11) de l'élément de transport (2), des aimants (2.12) sont logés entre la bande de transport (2.9) et le support (2.11) et sont entraînés et déplacés par l'entraînement par chaîne dentée (1) et le moteur à engrenages concentriques compact (5) également disposé dans le chariot (3).

5. Système d'éléments de transport (0) selon la revendication 1, **caractérisé en ce que** dans l'élément de transport (2) via l'ouverture de guidage (2.7) avec la bande de transport (2.9) disposée à l'intérieur sur la surface intérieure opposée (2.8) et le rail de conducteur (2.10), le mouvement avant et arrière de l'entraînement ainsi que sa direction doit être déterminés et la connexion de tous les dispositifs à déplacer pour l'alimentation électrique doit être contrôlé, maintenu et connecté entre eux et à l'application respective via l'élément de connexion respectif (4).

6. Système d'éléments de transport (0) selon la revendication 1, **caractérisé en ce que** plusieurs éléments de transport monorail (2) doivent être reliés les uns aux autres dans une séquence à déterminer, constitués de pièces profilées de forme linéaire et courbe (2.3, 2.4) et de forme torsionnelle contrarotative (2.5, 2.6), et dans lesquels un ou plusieurs entraînements sont montés de manière mobile, qui sont également mobiles dans la direction tridimensionnelle par l'intermédiaire d'aiguillages disposés (8).

7. Système d'éléments de transport (0) selon la revendication 6, **caractérisé en ce que** les aiguillages (8) sont en outre formés à travers, au-dessus ou en dessous de la zone linéaire de l'élément de transport respectif (2), lesquels commandent des entraînements individuels en forme d'arc ou de Y via les chariots associés (3).

8. Système d'éléments de transport (0) selon la revendication 1, **caractérisé en ce que** plusieurs systèmes d'éléments de transport (0), dont les éléments de transport (2) présentent un guidage linéaire uniforme grâce à la disposition d'une séquence identique de profilés monorails spécifiques (2.3, 2.4, 2.5, 2.6) ainsi que de profilés à rails multiples de plus (2.13.1, 2.13.2, 2.13.3, 2.13.4) adaptés individuellement, dotés d'une ouverture de guidage (2.7), et de chacun desquels ressort un chariot (3) avec un élément de liaison (4), qui sont disposés à une distance définie les uns des autres, qui forment pour les profilés à rails multiples (2.13.1, 2.13.2, 2.13.3, 2.13.4) une hélice et un espace libre (6), dans lequel le chariot (3) doit être déplacé à l'intérieur de l'élément de transport (2) respectif par l'entraînement par chaîne linéaire (1) dans les ouvertures de réception (2.1) de la bande de transport (2.9) sur la surface intérieure respective (2.8) dans les éléments de transport (2) et via le moteur à engrenages concentriques (5) et une boîte de transport spatiale, carrée ou cylindrique (7), à fermer des deux côtés est reliée avec une partie supérieure rotative (7.1) et une partie inférieure (7.2) au chariot (3) par des éléments de liaison (4) dans une position verticale continue, est maintenue par ce dernier et est rotative en spirale et simultanément mobile verticalement dans l'espace libre (6).
